# EUROPÄISCHE PATENTSCHRIFT

(11) **EP 2 952 984 B1**
(45) Veröffentlichungstag und Bekanntmachung des Hinweises auf die Patenterteilung: **11.09.2019**
(21) Anmeldenummer: 15158942.1
(22) Anmeldetag: 13.03.2015
(51) Int. Cl.: G05B 19/042, G05B 15/02

(54) **VERFAHREN ZUM EINSTELLEN VON FUNKTIONALITÄTEN EINES SITUATIONSWÄCHTERS SOWIE GEBÄUDEINSTALLATION**
METHOD FOR ADJUSTING THE FUNCTIONS OF A SITUATION MONITOR AND BUILDING INSTALLATION
PROCÉDÉ DE RÉGLAGE DE FONCTIONNALITÉS D'UN DISPOSITIF DE SURVEILLANCE DE SITUATION ET INSTALLATION DE BÂTIMENT

(30) Priorität: 02.06.2014 DE 102014107682
(43) Veröffentlichungstag der Anmeldung: 09.12.2015
(73) Patentinhaber: Insta GmbH, 58509 Lüdenscheid (DE)
(72) Erfinder: Neuhaus, Dr.-Ing. Stefan, 44287 Dortmund (DE); Detzner, Peter, 58089 Hagen (DE)

(56) Entgegenhaltungen:
- WO-A1-2011/015901
- WO-A1-2012/010109
- DE-A1-102009 016 918
- DE-A1-102010 032 761
- US-A1- 2009 271 004

## Beschreibung

Die Erfindung betrifft ein Verfahren zum Einstellen von Funktionalitäten eines Situationswächters, insbesondere eines Situationswächters, der seinen Überwachungsbereich mehrdimensional erfasst bzw. aufnimmt. Beschrieben ist des Weiteren eine Gebäudeinstallation mit einem Situationswächter und zumindest einem von diesem angesteuerten Aktor.

Gebäudetechnische Installationssysteme können eine Vielzahl von unterschiedlichen Aktoren umfassen. Aktoren im Rahmen dieser Ausführungen sind jedwede von einer Steuereinheit ansteuerbare Bestandteile eines Gebäudeinstallationssystems. Somit handelt es sich hierbei beispielsweise auch um Schnittstellen, etwa Kommunikationsschnittstellen neben den üblichen Aktoren wie Raumbeleuchtung, Beschattungseinrichtungen oder dergleichen. Gebäudeinstallationen, wie beispielsweise eine Raumbeleuchtung, eine Beschattungseinrichtung oder dergleichen werden in vielen Fällen situationsabhängig angesteuert. Bei einer Beschattungseinrichtung, wie beispielsweise einer Jalousieeinrichtung, kann diese in Abhängigkeit vom einfallenden Sonnenlicht eingerichtet werden. Zum Ansteuern einer Raumbeleuchtung werden Präsenzmelder eingesetzt, die die Raumbeleuchtung und somit die eine oder die mehreren Leuchten als Aktor bzw. Aktoren ansteuert, wenn die Präsenz einer oder mehrerer Personen in dem Raum, etwa beim Eintreten detektiert wird. Neben Situationswächtern, wie vorbeschrieben, werden auch solche eingesetzt, mit denen der Überwachungsbereich zweidimensional erfasst wird. Mit solchen Situationswächtern ist eine ortsaufgelöste Erfassung innerhalb des Überwachungsbereiches möglich. Die Auflösung in der Erfassung des Überwachungsbereiches ist von dem Auflösungsvermögen des dem Situationswächter zugehörigen Sensors abhängig. Bei einem Situationswächter mit ortsaufgelöster Erfassung seines Überwachungsbereiches ist der Sensor in aller Regel als Flächensensor ausgelegt. Bei diesem kann es sich beispielsweise um einen Kamerasensor handeln. Derartige Situationswächter erlauben ein sehr viel detaillierteres Erfassen des diesem zugeordneten Überwachungsbereiches. Wenn mit derartigen Situationswächtern eine ortsaufgelöste Erfassung vorgenommen werden soll, beispielsweise eine Unterteilung seines Überwachungsbereiches in zwei oder mehr Teilbereiche, die auch unabhängig voneinander ausgewertet werden können, bedarf dieses einer entsprechenden Einrichtung des Situationswächters, was typischerweise im Zusammenhang mit seiner Inbetriebnahme vorgenommen wird.

DE 10 2009 016 918 A1 offenbart eine Beleuchtungseinrichtung mit einer Kamera. Diese dient zum Bereitstellen eines Abbildes eines Erfassungsbereiches, um darin vordefinierte Situationen zu erkennen. Teil der Beleuchtungseinrichtung sind desweiteren eine Mustererkennungseinheit sowie eine Beleuchtungseinheit. In Abhängigkeit von der von der Kamera aufgenommenen und der Mustererkennungseinheit detektierten Situation wird entsprechend der detektierten Situation die Beleuchtungseinheit entsprechend angesteuert. Bei dieser Beleuchtungseinrichtung erfolgt somit eine automatisierte Anpassung der Beleuchtung an zuvor definierte Situationen innerhalb des Überwachungsbereiches der Kamera.

Eine prinzipiell gleich aufgebaute Beleuchtungsanlage ist aus DE 10 2010 032 761 A1 bekannt. Bei dieser wird eine Tiefensensor-Kamera eingesetzt.

In aller Regel wird ein solcher, seinen Überwachungsbereich mehrdimensional erfassender Situationswächter an einen Gebäudeinstallationsbus angeschlossen sein. Eine Einrichtung des Situationswächters, um diesem bestimmte Funktionalitäten zuzuordnen, erfolgt mit der für die Einrichtung des Bus-Systems bzw. seiner Teilnehmer verwendeten Software. Dieses bedeutet, dass eine den Situationswächter einzurichten wünschende Person über eine vorhandene Bus-Schnittstelle Zugang zu dem Gebäudeinstallationsbus haben muss. Derartige Arbeiten können nur von entsprechend geschulten Personen vorgenommen werden. Gleiches gilt für eine Einrichtung des Situationswächters an einer dem Situationswächter zugeordneten Schnittstelle. Einrichtungen von Geräten der vorbeschriebenen Art werden in aller Regel von Dienstleistern ausgeführt. In manchen Fällen möchte man Dritten zum Einrichten eines solchen Situationswächters allerdings keinen Zugang zu dem gesamten Gebäudeinstallationsbus gestatten, zum Beispiel dann, wenn es sich bei an den Installationsbus angeschlossenen Gebäudeinstallationen auch um Installationen mit gegebenenfalls sensibler Information handelt. Mitunter wird auch gewünscht, dass eine die Einrichtung des Situationswächters vornehmende Person nicht über die Überwachungsfunktion des Situationswächters und insbesondere sein Auflösungsvermögen informiert wird und dass die Einrichtung auch von Personen vorgenommen werden kann, die in Bezug auf eine Einrich-tungssoftware ungeschult sind.

Aus WO 2011/015901 A1 ist ein Verfahren zum Eingeben von Daten oder zum Programmieren von Codes an eine Rolladensteuerungseinrichtung bekannt. Zu diesem Zweck verfügt die Steuerungseinrichtung über ein Lesegerät, über das vordefinierte Befehle eingelesen werden können, welche Befehle beispielsweise als Barcode vor das Lesegerät gehalten werden. Hierdurch wird die Programmierung der Steuerungseinrichtung erleichtert. Eine solche Programmierung dient jedoch nicht zur Parametrierung und/oder zur Ansteuerung eines Sensors.

Ausgehend von diesem diskutierten Stand der Technik liegt der Erfindung daher die Aufgabe zugrunde, ein Verfahren zum Einstellen von Funktionalitäten eines Situationswächters im Rahmen einer Gebäudeinstallation vorzuschlagen, mit dem nicht nur die gewünschte Einrichtung auch von mit einem Umgang von typischerweise eingesetzter Installationssoftware ungeübten Personen durchgeführt werden kann, sondern auch bei dem für eine solche Einstellung die mit dem Situationswächter gewonnenen Daten, zum Beispiel das erfasste Abbild des Überwachungsbereiches, von der die Einrichtung vornehmenden Person für die Zwecke der Einrichtung des Situationswächters nicht benötigt wird. Zugleich liegt der Erfindung die Aufgabe zugrunde, eine Gebäudeinstallation mit einem entsprechend ausgelegten Situationswächter vorzuschlagen.

Gelöst wird die verfahrensbezogene Aufgabe durch ein Verfahren gemäß Anspruch 1.

Die gebäudeinstallationsbezogene Aufgabe wird gelöst durch eine Gebäudeinstallation mit einem Situationswächter zur Durchführung des Verfahrens nach Anspruch 1, umfassend einen seinen Überwachungsbereich mehrdimensional erfassenden Sensor sowie eine zum Auswerten der Sensordaten dienende Steuereinheit und mit wenigstens einem durch die Steuereinheit des Situationswächters ansteuerbaren Aktor, welcher Situationswächter über eine Programmierschnittstelle zu seiner Parametrierung und/oder seiner Ansteuerung verfügt, durch die innerhalb des Überwachungsbereiches des Sensors platzierte und durch eine Situationserfassung erfasste Programmiermarker bezüglich eines damit erfassten Programmiercodes identifiziert und ausgewertet werden können.

Bei diesem Verfahren - entsprechendes gilt für die beanspruchte Gebäudeinstallation - wird die mehrdimensionale und damit zumindest zweidimensionale ortsaufgelöste Erfassung des Überwachungsbereiches durch den Situationswächter als Programmierschnittstelle benutzt. Die Programmierung bzw. die Programmbefehle werden durch Programmiermarker bereitgestellt. Ein solcher Programmiermarker trägt einen Programmiercode. Beispielsweise kann es sich bei einem solchen Programmiermarker um eine mit dem Programmiercode bedruckte Folie oder mit einem solchen Code bedruckten Karton handeln. Der Programmiercode kann in Abhängigkeit auch vom Auflösungsvermögen des Sensors des Situationswächters einfach oder auch komplexer aufgebaut sein. Ist der Programmiercode sehr einfach ausgeführt, stellt der Programmiermarker als solcher den Programmiercode dar. Mithin handelt es sich dann um einen 1-Bit-Programmiercode. Die Größe und/oder die Geometrie eines solchen Programmiermarkers stellt dann den Programmiercode dar. Ist ein komplexerer Programmiercode vorgesehen, trägt ein solcher Programmiermarker einen hinsichtlich seiner Geometrie aufzulösenden Programmiercode, mithin einen x-Bit-Programmiercode.

Zumindest ein solcher Programmiermarker wird zum Zwecke der Programmierung des Situationswächters innerhalb seines Überwachungsbereiches angeordnet. Ein solcher Programmiermarker sowie der darauf befindliche Programmiercode erstrecken sich über zumindest einige Pixel des typischerweise eingesetzten Flächensensors, der eingesetzt wird, um den Überwachungsbereich innerhalb seines Auflösungsvermögens ortsaufgelöst zu erfassen. Dabei sind die Komplexität der Programmiercodes und das Auflösungsvermögen des Sensors aufeinander abgestimmt. Schließlich muss letzterer den Code identifizieren und von anderen unterscheiden können. Die durch den Sensor des Situationswächters im Rahmen einer Situationserfassung gewonnenen Daten können sodann im Hinblick auf eine Identifizierung des erfassten Programmiermarkers mit seinem Programmiercode ausgewertet werden. Ist der Programmiercode identifiziert und ausgewertet, stellt dieser einen an den Situationswächter übermittelten Befehl dar. Typischerweise wird es sich bei einem solchen Befehl um den Aufruf einer vordefinierten Routine handeln, beispielsweise eine Berechnungsroutine, eine Ansteuerroutine oder dergleichen. Die Ausführung des erfassten Befehls kann in der Steuereinheit des Situationswächters oder, für den Fall, dass der Situationswächter an ein Kommunikationsmedium angeschlossen ist, von einer anderen Recheneinheit vorgenommen werden, die Teil des Kommunikationsmediums ist, etwa an einen Datenbus angeschlossen ist. In aller Regel wird man den Situationswächter so auslegen, dass die Auswertung der mit seinem Sensor erfassten Daten in der Steuereinheit des Situationswächters vorgenommen wird. Eine Umsetzung des erfassten Befehls kann die Steuereinheit des Situationswächters oder auch an anderer Stelle erfolgen. Eine Berechnungsroutine kann genutzt werden, um in Abhängigkeit von dem Ort der Erfassung des Programmiermarkers und einer darin enthaltenen Richtungsinformation eine Unterteilung des Überwachungsbereiches in mehrere einzelne Teilbereiche vorzunehmen. Im Zuge einer solchen Unterteilung erfolgt eine Zuordnung bestimmter Pixelbereiche des Sensors zu der durch den auf dem Programmiermarker enthaltenen Code vorgesehene Überwachungsbereichsunterteilung. Im Zuge einer solchen Zuordnung können anschließend die einem Überwachungsteilbereich zugeordneten Pixel in Bezug auf den gewünschten Überwachungsteilbereich ausgelesen und/oder ausgewertet werden. Veränderungen in einem Überwachungsteilbereich können somit rascher erkannt werden, da bei der Überwachung eines Überwachungsteilbereichs nicht sämtliche Pixel des typischerweise als Flächensensor ausgelegten Sensors ausgelesen werden müssen, sondern nur die einem bestimmten Überwachungsteilbereich zugeordneten. Eine Unterteilung kann in eine Vielzahl von Teilbereichen vorgenommen werden und wird dieses in Abhängigkeit von der Gestaltung und Nutzung des Raumes vornehmen.

Zum Zwecke einer Überwachungsbereichunterteilung ist der Programmiercode mit einer Richtungsinformation ausgerüstet, auf der aufbauend eine oder auch mehrere Teilbereichsgrenzen situationswächterseitig berechnet werden können. Eine Richtungsinformation in bzw. auf einem solchen Programmiermarker kann beispielsweise durch eine eine Vorzugsrichtung aufweisende Codierung an den Situationswächter übermittelt werden. Eine Richtungsinformation kann auch programmiert werden, indem zwei voneinander beabstandete Programmiermarker an entsprechenden Stellen im Überwachungsbereich angeordnet werden. Die Richtungsinformation ergibt sich dann aus der Berechnung virtueller Verbindungslinien und/oder Schnittpunkte.

In analoger Weise kann ein Programmiermarker beispielsweise auch Informationen in Bezug auf den oder die von dem Situationswächter anzusteuernden Aktoren enthalten. Handelt es sich bei den Aktoren etwa um mehrere Leuchten oder Gruppen von Leuchten, können diese unterschiedlichen Überwachungsregionen zugeordnet sein. Hierfür ist es erforderlich, dass der Situationswächter die Raumlage der Leuchten in Bezug auf eine Unterteilung des Überwachungsbereiches kennt. Mitunter wird es sich bei den Aktoren auch um solche handeln, die selbst nicht innerhalb des Überwachungsbereiches des Situationswächters angeordnet sind. Dieses dürfte beispielsweise bei Deckenleuchten der Fall sein, die aufgrund dieser Anordnung außerhalb des Erfassungsbereiches des Sensors des Situationswächters sind. Die Anordnung der Leuchten kann in einem solchen Fall dem Situationswächter dadurch bekannt gegeben werden, dass entsprechende Programmiermarker in der Projektion der Leuchten in den Überwachungsbereich hinein angeordnet werden, beispielsweise auf dem Boden des Raumes. Entsprechendes gilt auch für andere Aktoren außerhalb des eigentlichen Erfassungsbereiches des Situationswächters, wie beispielsweise Jalousien. Auch wenn der Situationswächter genutzt werden soll, dass durch Auswerten von Gesten von im Überwachungsbereich befindlichen Personen der eine oder der andere Aktor angesteuert werden soll, ist die Kenntnis der Raumlage der Aktoren erforderlich.

Den auf dem oder den Programmiermarkern enthaltenen Code wird man vorzugsweise derart auslegen, dass dieser sich auf dem durch den Sensor des Situationswächters erfassten Bild besonders deutlich bemerkbar macht, sich mithin deutlich von seiner Umgebung unterscheidet. Dieses reduziert den Aufwand einer Auswertung der durch den Sensor des Situationswächters gewonnen Daten zum Zwecke einer Identifizierung eines Programmiercodes. Bevorzugt wird man den Code mit einem möglichst großen Kontrast zu dem üblichen Erfassten realisieren. Handelt es sich bei dem Sensor des Situationswächters beispielsweise um einen Infrarotsensor (IR-Sensor) lässt sich dieser Kontrast zwischen dem auf dem Programmiermarker befindlichen Programmiercode und der Umgebung, in der der Programmiermarker platziert wird, dadurch bereitstellen, dass der durch einen Programmiermarker bereitgestellte Code durch IR-Licht total reflektierende und/oder absorbierte Bereiche gebildet wird. Dann lässt sich ein im Rahmen einer Situationserfassung erfasster Code eines Programmiermarkers durch einfachen Mustervergleich auch mit relativ geringen Auswerteressourcen identifizieren. Oberflächen, die IR-Licht total reflektieren, und solche, die IR-Licht absorbieren, sind hinlänglich bekannt. Ausgenutzt wird bei einem solchen Konzept, dass typischerweise im Erfassungsbereich weder IR-Licht total reflektierende noch IR-Licht total absorbierende Bereiche nicht vorhanden sind, jedenfalls nicht in einer Anordnung zueinander, wie durch den Code bereitgestellt.

Um eine Einstellung bzw. Programmierung des Situationswächters vorzunehmen, kann der Situationswächter zuvor in einen Programmiermodus geschaltet werden. Dieses ist jedoch nicht unbedingt erforderlich, kann aber für manche Programmierungen zweckmäßig sein. Auch das Schalten des Situationswächters in seinen Programmiermodus kann mit einem solchen, einen entsprechenden Programmiercode tragenden Programmiermarker vorgenommen werden. Dieser wird während des Betriebsmodus des Situationswächters in dessen Überwachungsbereich angeordnet. Hat der Situationswächter diesen Programmiermarker mit dem darauf befindlichen Code erfasst und identifiziert, wird dieses in der Ausführung des durch den Code enthaltenen Befehls in seinen Programmiermodus geschaltet. Der Situationswächter kann selbstverständlich auch auf andere Art und Weise in seinem Programmiermodus geschaltet werden, etwa durch einen am Gerät befindlichen Taster oder durch einen wandseitig angeordneten Taster. Um den Programmiermodus anzuzeigen, kann beispielsweise eine am Sensor angeordnete Signalleuchte (z.B. LED) leuchten. Befindet sich der Situationswächter in diesem Modus, wird typischerweise die ansonsten ausgeführte Auswertung zur Überwachung des Überwachungsbereiches unterbrochen oder ausgeschaltet. Beispielsweise kann in einem solchen Programmiermodus die Auswertung der durch den Situationswächter erfassten Daten allein auf einen Mustervergleich der auf Programmiermarkern enthaltenen möglichen Codes beschränkt sein. Entsprechend rascher vollzieht sich die Auswertung und Identifizierung der auf dem Programmiermarker enthaltenen Codes.

Erfolgt eine Programmierung des Situationswächters in einem Programmiermodus, wird dieser nach Abschluss der gewünschten Programmierung durch einen bestimmten Befehl beendet. Ein solcher Befehl kann situationswächterseitig generiert werden, wenn innerhalb eines vorbestimmten Zeitintervalls keine Situation erfasst worden ist, in der entweder vorhandene Programmiermarker hinsichtlich ihrer Position geändert und/oder neue Programmiermarker platziert worden sind. Beenden lässt sich der Programmiermodus auch durch Anordnen eines Programmiermarkers mit entsprechendem Programmiercode innerhalb des Überwachungsbereiches des Situationswächters.

Ist der Situationswächter ausgelegt, den Überwachungsbereich dreidimensional zu erfassen, kann der Code eines Programmiermarkers auch dreidimensional aufgebaut sein. Entsprechend erfolgt bei einer solchen Ausgestaltung ein Mustervergleich mit diesbezüglich situationswächterseitig bekannten dreidimensionalen Mustern.

Mit einem solchen Verfahren bzw. mit einer Gebäudeinstallation mit einem Situationswächter, der zur Durchführung dieses Verfahrens geeignet ist, lässt sich dieser somit, ohne Zugriff auf den Situationswächter über einen Installationsbus oder auch direkt mittels einer Einrichtungssoftware haben zu müssen, einrichten. Genauso gut lässt sich dieser in derselben Weise während seines Überwachungsbetriebes steuern.

Da der Situationswächter seinen Überwachungsbereich zumindest zweidimensional erfasst, kann dieser, wenn entsprechend eingerichtet, zum Ansteuern von durch den Situationswächter angesteuerten Aktoren durch Gesten benutzt werden. Infolge einer zweidimensionalen Erfassung können bestimmte Gesten als angezeigte Richtungen ausgewertet werden, beispielsweise durch einen ausgestreckten Arm einer im Überwachungsbereich befindlichen Person. Wenn diese Geste, also beispielsweise der ausgestreckte Arm in Richtung eines Aktors weist, kann dieser über diese Geste angesteuert werden. Handelt es sich bei dem Aktor beispielsweise um eine Leuchte oder weist die Geste, beispielsweise der ausgestreckte Arm, in diejenige Richtung, in der sich die Leuchte, projiziert auf die Überwachungsebene, befindet, kann diese über eine vorbestimmte Dimmroutine angesteuert werden. Diese Dimmroutine, gemäß der beispielsweise ein zyklisches Heller- und Dunklerwerden durchlaufen wird, wird gemäß einem Ausführungsbeispiel beendet, wenn die Geste nicht mehr erfasst wird, also: beispielsweise der ausgestreckte Arm nicht mehr ausgestreckt ist oder seine Richtung geändert hat. Je nach dem Auflösungsvermögen des Sensors des Situationswächters können Aktoren auch durch aufeinander folgende Gesten angesteuert werden. Durch entsprechende Routinen werden Fehlansteuerungen minimiert. Beispielsweise kann vorgesehen sein, dass bei einer solchen Ansteuerung der Aktor erst angesteuert wird, wenn die Geste länger als ein vordefiniertes Zeitintervall, beispielsweise wenige Sekunden, aufrechterhalten wird.

Wird ein dreidimensionaler Sensor zur Ausbildung des Situationswächters eingesetzt, ist eine Auswertung der Richtung einer Geste nicht nur in der Erfassungsebene, sondern auch in der Tiefe möglich. Eine Identifizierung von mit einer solchen Geste angesprochener Aktoren ist eindeutig, was bei einer zweidimensionalen Auslegung des Sensors nur dann der Fall ist, wenn in einer bestimmten Richtung auch tatsächlich nur ein Aktor vorgesehen ist.

Dreidimensionale Sensoren lassen sich beispielsweise durch einen Stereokamerasensor mit zwei einzelnen, mit Abstand zueinander angeordneten Sensoren realisieren. Bevorzugt wird jedoch eine Ausgestaltung, bei der nur ein Flächensensor benötigt wird. Möglich ist dieses beispielsweise mit einem Infrarotsensor mit einer Gruppe von IR-Licht emittierenden LEDs sowie einem zweidimensionalen Array IR-empfindlicher optoelektronischer Wandlerelemente handelt. Dann kann die Tiefeninformation über die Laufzeit von der oder den lichtabgebenden Dioden zu dem Sensorarray gewonnen werden. Diese Auswertung wird allgemein als Time-of-Flight-Auswertung bezeichnet. Auch andere Konzepte lassen sich verwirklichen, wie beispielsweise auch das Prinzip von "Structured Light". Bei Einsatz eines derartigen Sensors lässt ein Kontrast zwischen einem Programmiermarker mit seinem Programmiercode und der Umgebung in dem Raum besonders deutlich herausstellen, da sich die IR-Licht reflektierenden Eigenschaften hinsichtlich des Abstands von dem Sensor unterscheiden. IR-absorbierende Bereiche werden als Bereiche mit einer Tiefenerstreckung von "nicht definiert" oder "null" dargestellt, während IR-Licht total reflektierende Bereiche den tatsächlichen Abstand zum Sensor angeben.

Nachfolgend ist die Erfindung anhand eines Ausführungsbeispiels unter Bezugnahme auf die beigefügten Figuren beschrieben. Es zeigen:
- **Fig. 1:**: eine schematisierte Darstellung eines in einem Gebäude befindlichen Raumes mit einer einen Situationswächter umfassenden Gebäudeinstallation,
- **Fig. 2:**: eine Draufsicht auf den Boden des Raumes der Figur 1 mit darauf angeordneten Programmiermarkern,
- **Fig. 3a, 3b:**: die in Figur 2 gezeigten Programmiermarker in einer vergrößerten Darstellung,
- **Fig. 4:**: eine schematisierte Darstellung des Raumes der Figur 1 mit einer darin befindlichen Person und
- **Fig. 5:**: eine Draufsicht auf den Boden des Raumes der Figur 1 mit anderen, darauf angeordneten Programmiermarkern.

In einem Raum 1 eines nicht näher dargestellten Gebäudes ist eine Beleuchtungseinrichtung als Gebäudeinstallation installiert. Die Beleuchtungseinrichtung umfasst vier Deckenleuchten L₁ bis L₄. Die Deckenleuchten L₁ bis L₄ sind in zwei Leuchtengruppen LG₁, LG₂ unterteilt. Eine erste Leuchtengruppe LG₁ wird durch die Leuchten L₁ und L₂ gebildet. Eine zweite Leuchtengruppe LG₂ wird durch die Leuchten L₃ und L₄ bereitgestellt. Die Leuchten L₁ bis L₄ sind an einem Installationsbus 2 angeschlossen. Bei dem dargestellten Ausführungsbeispiel ist der Installationsbus 2 nicht auf die Leuchten L₁ bis L₄ und die weiteren, noch zu beschreibenden Komponenten beschränkt, sondern Teil eines sich durch das gesamte Gebäude ziehenden Bussystems. Der Beleuchtungseinrichtung als Gebäudeinstallation ist neben den Leuchten L₁ bis L₄ ein Situationswächter 3 zugeordnet. Über den Situationswächter 3 werden die Leuchten L₁ bis L₄ angesteuert. Bei dem dargestellten Ausführungsbeispiel ist vorgesehen, dass jeweils die Leuchten L₁, L₂ der Leuchtengruppe LG₁ und die Leuchten L₃, L₄ der Leuchtengruppe LG₂ gemeinsam angesteuert werden, weshalb diese zu einer Gruppe zusammengefasst sind. Der Situationswächter 3 umfasst einen Sensor 4 und eine Steuereinheit 5. Die Steuereinheit 5 wertet die über den Sensor 4 gewonnenen Daten aus und steuert in Abhängigkeit von dem Auswertergebnis die Leuchtengruppen LG₁, LG₂ an. Bei dem Sensor 4 handelt es sich um einen Infrarotflächensensor, der wiederum über ein IR-Diodenarray und über einen in einzelne optoelektrische Wandlerelemente (Pixel) unterteilten Flächensensor verfügt. Der Sensor 4 wird über die Steuereinheit 5 angesteuert. Betrieben werden kann der Sensor 4 als 3D-Sensor, und zwar durch Auswerten der von einem ausgesendeten IR-Puls benötigten Zeit, bis dieser von einem oder mehreren Pixeln des Sensorarrays erfasst wird, wenn dieser von einem im Überwachungsbereich 6 befindlichen Gegenstand reflektiert wird. Die Laufzeit ist proportional zur zurückgelegten Strecke des IR-Pulses und beinhaltet daher eine Entfernungsinformation. Mit dem Sensor 4 lässt sich der Überwachungsbereich 6 dreidimensional und somit nach Art einer Tiefenkarte erfassen.

Der Situationswächter 3 ist ausgelegt, dass dieser programmiert werden kann. Dieses macht man sich unter anderem im Zusammenhang mit seiner Inbetriebnahme zunutze. Programmiert und damit in Bezug auf eine oder mehrere seiner Funktionalitäten eingestellt werden kann der Situationswächter 3 unter Ausnutzung seiner optischen Erfassungseigenschaften, die in diesem Zusammenhang als optische Programmierschnittstelle genutzt werden. Für eine solche optische Programmierung wird kein Zugang zu dem Installationsbus 2 oder anderweitig zu der Steuereinheit 5 des Situationswächters 3 benötigt.

Bei dem dargestellten Ausführungsbeispiel wird der Situationswächter 3 für seine optische Programmierung in einen Programmiermodus geschaltet. Dieses ist nicht unbedingt erforderlich, wird jedoch bei diesem Ausführungsbeispiel vorgenommen. In seinen Programmiermodus wird der Situationswächter 3 durch Anordnen eines ersten Programmiermarkers in dem Überwachungsbereich 6 geschaltet. Ein solcher Programmiermarker trägt einen bestimmten Code, auch als Programmiercode anzusprechen, der bei dem beschriebenen Ausführungsbeispiel durch ein bestimmtes Muster von Signal total absorbierenden (bzw. weitestgehend total absorbierenden) und Signal total reflektierenden (bzw. weitestgehend total reflektierenden) Flächenbereichen gebildet ist. Beim Betrieb des Situationswächters 3 wird das erfasste Bild regelmäßig auf die Erfassung dieses Codes durch einen Mustervergleich untersucht. Wird ein solcher Code identifiziert, schaltet der Situationswächter 3 in seinen Programmiermodus. In diesem Modus erfolgt eine Auswertung der Sensordaten in Bezug auf eine Identifikation möglicher weiterer Programmiercodes. Für die Einrichtung des Situationswächters 3 werden im Überwachungsbereich 6, typischerweise auf dem Boden 7 des Raumes 1 Programmiermarker angeordnet, die jeweils einen Programmiercode tragen. Für die Zwecke der Programmierung des Situationswächters 3 können Befehle auf diese Weise nacheinander oder auch mehrere mit Abstand zueinander auf dem Boden 7 angeordnet werden, um mit einer einzigen Situationserfassung aufgenommen zu werden.

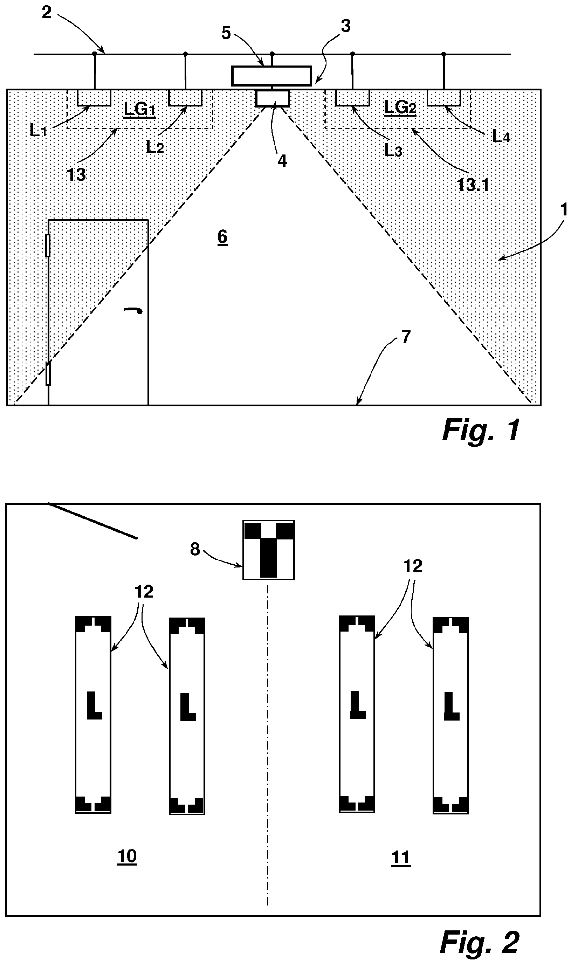

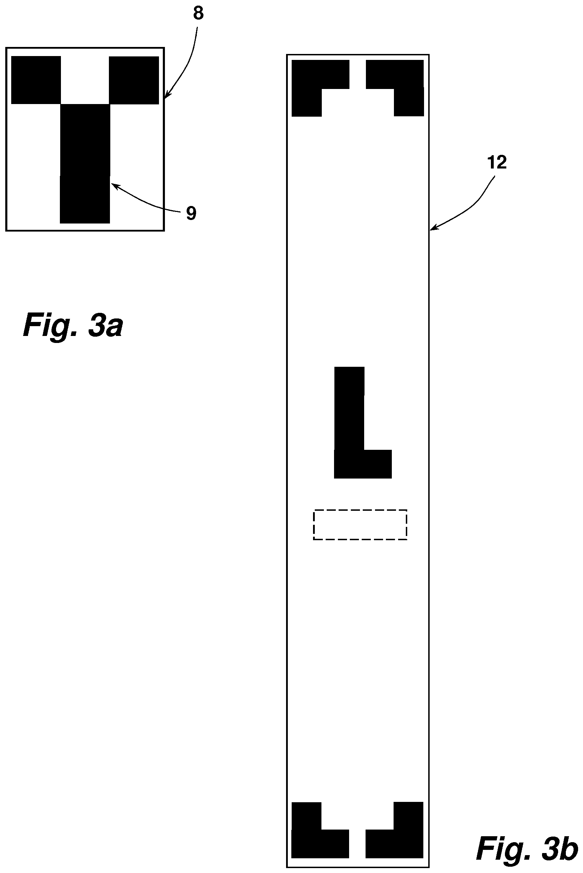

Figur 2 zeigt beispielhaft eine Anordnung eines Programmiermarkers 8. Der Programmiermarker 8 befindet sich etwa in der Mitte zwischen den beiden Leuchtengruppen LG₁, LG₂ mit geringem Abstand zu der hinteren Raumwand. Der auf dem Programmiermarker 8 aufgedruckte Code ist in einer vergrößerten Darstellung in Figur 3a gezeigt. Dieser sich über etliche Pixel des Sensors 4 erstreckende Code ist T-förmig ausgeführt. Hierdurch beinhaltet der Code eine Richtungsinformation, und zwar dadurch, dass der längere Schenkel 9 zu der gegenüberliegenden Wand weist. Die Erfassung des Codes des Programmiermarkers 8 führt dazu, dass der Überwachungsbereich 6 in der Flucht des Schenkels 9 in zwei Überwachungsteilbereiche 10, 11 unterteilt wird. Die Trennlinie zwischen den Teilbereichen 10, 11 ist in Figur 2 strichpunktiert dargestellt. Diese Linie gibt die Spur der sich auch in vertikaler Richtung erstreckenden Trennebene wieder. Die Teilung des Überwachungsbereiches 6 in die beiden Teilbereiche 10, 11 korrespondiert mit der Anordnung der beiden Leuchtengruppen LG₁, LG₂, so dass die aus den Leuchten L₁ und L₂ gebildete Leuchtengruppe LG₁ in dem Überwachungsteilbereich 10 und die aus den Leuchten L₃ und L₄ gebildete Leuchtengruppe LG₂ in dem Überwachungsteilbereich 11 angeordnet sind. Vorgenommen wird diese beispielhaft beschriebene Programmierung des Situationswächters 3, damit situationsabhängig die dem Teilbereich 10 und/oder die dem Teilbereich 11 zugehörigen Leuchtengruppe angesteuert werden kann. Ziel dieser Einrichtung ist, dass die Leuchten derjenigen Leuchtengruppe angesteuert werden, in deren Überwachungsteilbereich 10 oder 11 sich eine oder mehrere in dem Raum 1 aufhaltende Personen befinden. Bei einem Wechsel der Person von dem Teilbereich 11 in den Teilbereich 10 wird bei diesem Beispiel die Leuchtengruppe LG₂ herabgedimmt, während die Leuchtengruppe LG₁ aufgehellt wird. Entsprechendes gilt auch für andere von dem Situationswächter 3 angesteuerte Aktoren, die in Abhängigkeit von der Teilbereichsbelegung in dem Raum 1 angesteuert werden, wie beispielsweise eine Beschattungseinrichtung.

Eine Personenerfassung erfolgt mit dem Situationswächter 3 durch seine Fähigkeit in seinem Überwachungsbereich 6 Objekte/Subjekte dreidimensional erfassen zu können und auf diese Weise auch Personen von anderen, in dem Raum 1 befindlichen Objekten zu unterscheiden. Insofern kann sich eine Auswertung der mit dem Situationswächter 3 gewonnenen Daten auf bewegende oder bewegte Objekte beschränken. Stationäre Objekte können durch einen Filterprozess, zum Beispiel eine Differenzbildbetrachtung eliminiert werden, so dass eine solche Auswertung auch ohne größere Rechenressourcen möglich ist.

Nach der auf diese Weise erfolgten Einrichtung bzw. Programmierung des Situationswächters 3 schaltet dieser bei dem dargestellten Ausführungsbeispiel selbsttätig wieder in seinen Überwachungsmodus, und zwar dann, wenn nach einer gewissen Zeitspanne, beispielsweise 30 Sekunden keine Änderung in der Positionierung des Positionsmarkers 8 oder das Hinzufügen eines oder mehrere weiterer Programmiermarker erfasst worden ist. Bei dem vorbeschriebenen Ausführungsbeispiel ist der Situationswächter 3 zunächst lediglich in Bezug auf eine Funktionalität - hier: der Einrichtung von Überwachungsteilbereichen - eingerichtet worden. Es versteht sich, dass auf dieselbe Art und Weise unterschiedliche Funktionalitäten des Situationswächters 3 eingerichtet werden können.

Programmiert werden kann der Situationswächter 3 beispielsweise auch mit zusätzlichen Positionsdaten, etwa der Anordnung der Leuchten L₁ bis L₄ an der Decke. Diese befinden sich, wie aus Figur 1 erkennbar, außerhalb des Überwachungsbereiches 6 des Situationswächters 3. Um dem Situationswächter 3 die Positionierung der Leuchten L₁ bis L₄ mitzuteilen, wird in analoger Weise vorgegangen, wie dieses zu der vorbeschriebenen Programmierung zur Überwachungsbereichteilung erfolgt ist. Zusammen mit dem Programmiermarker 8 oder in einem nachfolgenden Schritt werden in der Projektion der Leuchten L₁ bis L₄ auf den Boden 7 des Raumes 1 entsprechende Programmiermarker 12 platziert. Figur 3b zeigt in einer vergrößerten Darstellung einen solchen Programmiermarker 12. Der darauf enthaltene Code besteht aus Winkeln, die jeweils eine Ecke der jeweiligen Leuchte L₁ bis L₄ darstellen. Die in den Winkeln enthaltene Richtungsinformation erlaubt eine Berechnung des Umrisses der jeweiligen Leuchte. Bei dem dargestellten Ausführungsbeispiel ist Teil des Programmiercodes ein "L". Hierdurch wird dem Situationswächter 3 mitgeteilt, dass es sich bei der jeweiligen Leuchte L₁ bis L₄ um eine Langfeldleuchte handelt. Gestrichelt ist unter dem "L" ein Querbalken als möglicher weiterer Code dargestellt. Dieser könnte als weitere Information, wenn vorhanden, genutzt werden, um dem Situationswächter 3 mitzuteilen, dass es sich bei der jeweiligen Leuchte um eine Pendelleuchte handelt. Bei dem dargestellten Ausführungsbeispiel handelt es sich bei der Leuchte L₁ - ebenso bei den Leuchten L₂ bis L₄ - um Deckeneinbauleuchten.

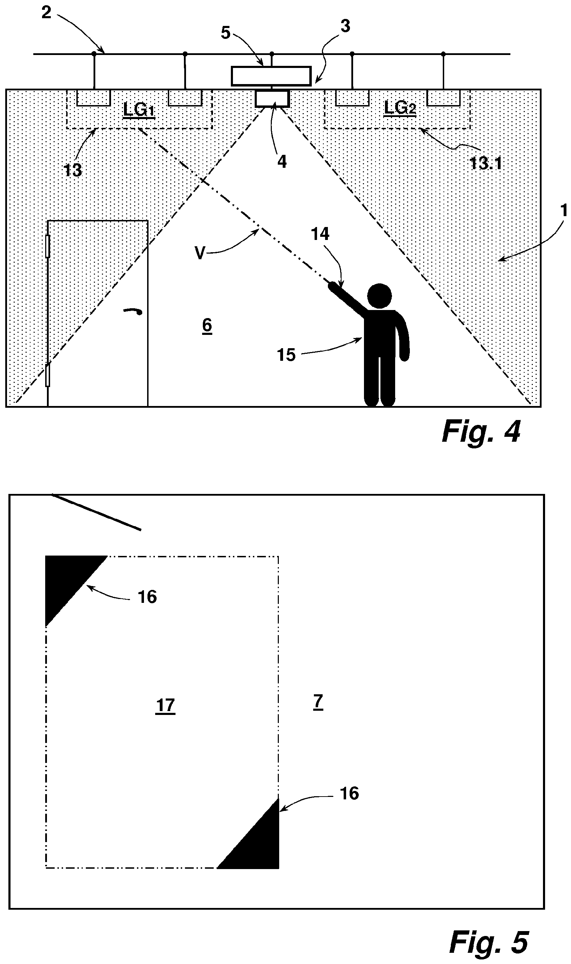

Für eine Ansteuerung der Leuchten L₁ bis L₄ bzw. der beiden Leuchtengruppen LG₁ und LG₂ wird die Raumlage derselben benötigt, da mittels des Situationswächters 3 ebenfalls eine Gestenansteuerung jeder Leuchtengruppe LG₁, LG₂ vorgesehen ist. Ausgenutzt wird hierbei die durch den Situationswächter 3 mögliche Tiefenerfassung von Objekten im Überwachungsbereich. Die Gestenansteuerung bei diesem Ausführungsbeispiel ist dergestalt vorgesehen, dass der ausgestreckte Arm 14 einer in dem Überwachungsbereich 6 befindlichen Person 15, wenn zumindest über eine vordefinierte Zeitspanne (beispielsweise 3 Sekunden) auf eine der beiden Leuchtengruppen LG₁, LG₂ gerichtet, dieses zu einer Ansteuerung derselben führt. Eine solche Situation ist in Figur 4 schematisiert dargestellt. Ausgewertet wird die durch den mit dem Situationswächter 3 erfassten, ausgestreckten Arm 14 der Person 15 beschriebene Richtung nach Art eines Vektors V. Trifft der Vektor V auf einen der beiden Leuchtengruppen LG₁, LG₂, wird dieses als Ansteuerwunsch systemseitig verstanden. In Figur 4 wird eine Ansteuerung der Leuchtengruppe LG₁ gewünscht. Daher ist der ausgestreckte Arm 14 in diese Richtung gerichtet. Da in aller Regel mit einem ausgestreckten Arm exakt eine der Leuchten einer Leuchtengruppe wohl nicht in der verlängerten Richtung des Arm getroffen wird, ist bei diesem Ausgangsbeispiel vorgesehen, die beiden Leuchtengruppen LG₁, LG₂ durch jeweils einen Hüllkörper virtuell zu vergrößern. Die Hüllkörper sind in Figur 1 mit den Bezugszeichen 13, 13.1 kenntlich gemacht. Hierbei handelt es sich um virtuell berechnete Quader, die die jeweiligen Leuchten L₁, L₂ bzw. L₃, L₄ einer Leuchtengruppe LG₁, LG₂ einfassen. Die Quader sind typischerweise sowohl in ihrer Breitenerstreckung als auch in ihrer Längserstreckung größer als der tatsächlich von den beiden Leuchten einer Leuchtengruppe LG₁, LG₂ eingenommene Raum (siehe Figur 1). Bei der Berechnung der Hüllkörper kann die Information einfließen, ob es sich bei den Leuchten um Deckenanbauleuchten bzw. Deckeneinbauleuchten handelt oder um Pendelleuchten. Bei dem in Figur 4 dargestellten Ausführungsbeispiel trifft der über den ausgestreckten Arm 14 berechnete Vektor V auf den Hüllkörper 13.

Die in Figuren 3a, 3b gezeigten Programmiermarker 8, 12 sind beispielhaft. Der darauf enthaltene Programmiercode kann auch anders ausgeführt sein, insbesondere komplexer. Die Darstellung der Programmiermarker mit ihren hellen, Signal total reflektierenden Bereichen und mit ihren dunklen, Signal total absorbierenden Bereichen erlauben eine einfache Erkennung derselben in einem von dem Situationswächter 3 aufgenommenen Datensatz. Sollte der Untergrund, auf dem die Programmiermarker 8, 12 aufgelegt sind, annähernd Signal total absorbierende Eigenschaften aufweisen, würde es sich anbieten, zwischen den dunkleren Codebereichen und dem Rand der jeweiligen Programmiermarker 8, 12 einen größeren Randbereich zu belassen.

Es versteht sich, dass bei Erfassen einer Person, die mit beiden Armen ausgestreckt auf beide Leuchtengruppen LG₁, LG₂ zeigt, gleichzeitig beide Leuchtengruppen LG₁, LG₂ angesteuert werden.

Eine solche Leuchtenansteuerung kann ein simples Ein- und Ausschalten der jeweiligen Leuchtengruppe LG₁, LG₂ zur Folge haben, ausgehend jeweils von dem aktuellen Zustand. Durchaus möglich ist auch, dass das Halten des ausgestreckten Armes nach Erfassen des Ansteuerwunsches einen Dimmzyklus auslöst, gemäß dem die Leuchten einer Leuchtengruppe LG₁, LG₂ zyklisch ausgehend von der aktuellen Stellung hoch und runter gedimmt werden. Wird der Arm der ansteuernden Person wieder abgesenkt, endet der Dimmzyklus mit dem dann aktuell eingestellten Wert. Die vorbeschriebene Leuchtenansteuerung ist beispielhaft zu verstehen. Gemäß einer anderen Ausgestaltung ist vorgesehen, dass der Arm nach Art eines Zeigers in die eine oder andere Richtung bewegt wird, und die Armbewegung den Dimmvorgang definiert. Aufgrund der Ausgestaltung des Sensors mit seiner Flächen- und Tiefenerfassung kann sowohl eine Ansteuerungsänderung durch Heben und Senken des Armes als auch durch Schwenken des Armes erfolgen. Auch eine kombinierte Armbewegung ist aufgrund der 3D-Erfassung des Überwachungsbereiches zur Programmierung bzw. Ansteuerung des Situationswächters möglich. Bei der Leuchtengruppe LG₁ können beispielsweise durch Heben und Senken des ausgestreckten Armes die Leuchten L₁, L₂, der Leuchtengruppe LG₁ gleichermaßen gedimmt werden. Ein Schwenken des Armes führt zu einer unterschiedlichen Ansteuerung der Leuchten L₁, L₂ dieser Leuchtengruppe LG₁.

Figur 5 zeigt in einem weiteren Ausführungsbeispiel zwei weitere Programmiermarker 16, die auf dem Boden 7 des Raumes 1 aufgelegt sind. Bei den Programmiermarkern 16 handelt es sich um IR-Licht absorbierende gleichschenkelige Dreiecke. Bei den Programmiermarkern 16 handelt es sich um zwei unabhängig voneinander zu handhabende. Diese dienen zum Definieren eines Überwachungsteilbereiches 17, der durch die strichpunktierte Linie angedeutet ist. Erfasst werden von dem Sensor nur die Programmiermarker 16. Die Verlängerung der Schenkel kann als Vektoren systemseitig berechnet werden. Die Schnittpunkte der Vektoren stellen sodann die beiden weiteren Eckpunkte des gewünschten Überwachungsteilbereiches 17 dar. Bei den Programmiermarkern 16 stellen diese aufgrund ihrer Geometrie den Programmiercode dar. Eine Programmierung kann auch mit anderen geometrisch einfachen Figuren, beispielsweise Kreisen, Quadraten, Rechtecken, Sechsecken oder dergleichen vorgenommen werden.

Die Möglichkeiten der Programmierung sind nicht auf die in dem Ausführungsbeispiel beschriebenen Funktionalitäten beschränkt. Eine Programmierung des Situationswächters kann auch sämtliche andere Funktionalitäten betreffen.

### Bezugszeichenliste

- 1: Raum
- 2: Installationsbus
- 3: Situationswächter
- 4: Sensor
- 5: Steuereinheit
- 6: Überwachungsbereich
- 7: Boden
- 8: Programmiermarker
- 9: Schenkel
- 10: Überwachungsteilbereich
- 11: Überwachungsteilbereich
- 12: Programmiermarker
- 13, 13.1: Hüllkörper
- 14: Arm
- 15: Person
- 16: Programmiermarker
- 17: Überwachungsteilbereich
- L₁ bis L₄: Leuchte
- LG₁, LG₂: Leuchtengruppe

## Patentansprüche

1. Verfahren zum Einstellen von Funktionalitäten eines seinen Überwachungsbereich (6) mehrdimensional erfassenden Situationswächters (3) als Teil einer zumindest einen Aktor (L₁ bis L₄) ansteuernden Gebäudeinstallation, **gekennzeichnet durch** folgende Schritte:
- Anordnen zumindest eines Programmiermarkers (8, 12, 16) innerhalb des Überwachungsbereiches (6) des Situationswächters (3) derart, dass dieser durch eine von dem Situationswächter (3) zur Verfügung gestellten Programmierschnittstelle erfasst werden kann,
- Auswerten der durch den Situationswächter (3) aufgenommenen Daten des Programmiermarkers (8, 12, 16) zum Identifizieren eines auf dem Programmiermarker enthaltenen Programmiercode, wobei der Programmiercode einen Befehl darstellt, und
- Ausführen des durch den zumindest einen Programmiermarker (8, 12, 16) an den Situationswächter (3) übermittelten Befehls.

2. Verfahren nach Anspruch 1, **dadurch gekennzeichnet, dass** bei dem Schritt des Anordnens des zumindest einen Programmiermarkers (8, 12, 16) mehrere Programmiermarker (8, 12, 16) mit Abstand zueinander angeordnet werden, welche Programmiermarker (8, 12, 16) im Zuge einer einzigen Situationserfassung von dem Situationswächter (3) erfasst werden.

3. Verfahren nach Anspruch 1 oder 2, **dadurch gekennzeichnet, dass** der Programmiercode des zumindest einen Programmiermarkers (8, 12, 16) in Bezug auf eine darin enthaltene Richtungsinformation ausgewertet wird.

4. Verfahren nach Anspruch 3, **dadurch gekennzeichnet, dass** die Richtungsinformation zum Unterteilen des Überwachungsbereiches (6) des Situationswächters (3) in zumindest zwei Überwachungsteilbereiche (10, 11, 17) verwendet wird.

5. Verfahren nach Anspruch 1 oder 2, **dadurch gekennzeichnet, dass** der Programmiercode des zumindest einen Programmiermarkers (12) in Bezug auf zumindest eine darin enthaltene Aktorinformation ausgewertet wird.

6. Verfahren nach Anspruch 5, **dadurch gekennzeichnet, dass** der Programmiercode des zumindest einen Programmiermarkers (12) eine Information zu der Art des Aktors (L₁ bis L₄) enthält.

7. Verfahren nach Anspruch 5 oder 6, **dadurch gekennzeichnet, dass** sich der zumindest eine von dem Situationswächter (3) ansteuerbare Aktor (L₁ bis L₄) außerhalb des Überwachungsbereiches (6) des Situationswächters (3) befindet und der Programmiercode des zumindest einen Programmiermarkers (12) eine Information zu der räumlichen Anordnung des zumindest einen Aktors (L₁ bis L₄) enthält.

8. Verfahren nach Anspruch 7, **dadurch gekennzeichnet, dass** situationswächterseitig die räumliche Anordnung und Erstreckung zumindest eines Aktors (L₁ bis L₄) in Form eines den oder die Aktoren (L₁ bis L₄) einfassenden Hüllkörpers (13, 13.1) gespeichert wird.

9. Gebäudeinstallation mit einem Situationswächter (3) zur Durchführung des Verfahrens nach einem der Ansprüche 1 bis 8, umfassend einen seinen Überwachungsbereich (6) mehrdimensional erfassenden Sensor (4) sowie eine zum Auswerten der Sensordaten dienende Steuereinheit (5) und mit wenigstens einem durch die Steuereinheit (5) des Situationswächters (3) ansteuerbaren Aktor (L₁ bis L₄), welcher Situationswächter (3) über eine Programmierschnittstelle zu seiner Parametrierung und/oder seiner Ansteuerung verfügt, durch die innerhalb des Überwachungsbereiches (6) des Sensors (4) platzierte und durch eine Situationserfassung erfasste Programmiermarker (8, 12, 16) bezüglich eines damit erfassten Programmiercodes identifiziert und ausgewertet werden können.

10. Gebäudeinstallation nach Anspruch 9, **dadurch gekennzeichnet, dass** mehrere Aktoren (L₁ bis L₄) durch die Steuereinheit (5) situationsabhängig, unabhängig voneinander ansteuerbar sind und zur Kommunikation zwischen der Steuereinheit (5) und den Aktoren (L₁ bis L₄) ein Kommunikationsmedium, etwa ein Datenbus (2) vorgesehen ist.

11. Gebäudeinstallation nach Anspruch 9 oder 10, **dadurch gekennzeichnet, dass** die Gebäudeinstallation an einen Installationsbus angeschlossen ist.

12. Gebäudeinstallation nach einem der Ansprüche 9 bis 11, **dadurch gekennzeichnet, dass** der Sensor (4) ein 3D-Sensor ist und betrieben wird, den Überwachungsbereich (6) orts- und tiefenaufgelöst zu erfassen.

13. Gebäudeinstallation nach Anspruch 12, **dadurch gekennzeichnet, dass** der Sensor (4) ein optischer Sensor, insbesondere ein Infrarotsensor ist und die Abstandsermittlung durch eine Time-of-Flight-Erfassung erfolgt.

## Claims

1. Process for setting the range of functions of a situation monitor (3) scanning the monitored area (6) multidimensionally as part of a building installation controlling at least one actuator (L₁ to L₄), **characterized by** the following steps:
- Arranging at least one programming marker (8, 12, 16) within the monitored area (6) of the situation monitor (3) in such a way that the programming marker can be detected by a programming interface provided by the situation monitor (3),
- Evaluation of the data of the programming marker (8, 12, 16) received by the situation monitor (3) for identification of a programming code on the programming marker, wherein the programming code is a command, and
- Executing the command transmitted by the at least one programming marker (8, 12, 16) to the situation monitor (3).

2. Process in accordance with Claim 1, **caracterized by the fact** that with the step of arranging the at least one programming marker (8, 12, 16) several programming markers (8, 12, 16) are arranged with a distance to one another, which programming markers (8, 12, 16) are detected by the situation monitor (3) in one single situation detection.

3. Process in accordance with Claim 1 or 2, **caracterized by the fact** that the programming code of the at least one programming marker (8, 12, 16) is evaluated with regard to a direction information contained therein.

4. Process in accordance with Claim 3, **caracterized by the fact** that the direction information is used to divide the monitored area (6) of the situation monitor (3) into at least two monitored subareas (10, 11,17).

5. Process in accordance with Claim 1 or 2, **caracterized by the fact** that the programming code of the at least one programming marker (12) is evaluated with regard to at least one actuator information contained therein.

6. Process in accordance with Claim 5, **caracterized by the fact** that the programming code of the at least one programming marker (12) contains an information as to the kind of actuator (L₁ to L₄).

7. Process in accordance with Claim 5 or 6, **caracterized by the fact** that the at least one actuator (L₁ to L₄) to be controlled by the situation monitor (3) is arranged outside the monitored area (6) of the situation monitor (3), and the programming code of the at least one programming marker (12) contains an information on the spatial arrangement of the at least one actuator (L₁ to L₄).

8. Process in accordance with Claim 7, **caracterized by the fact** that on the side of the situation detector the spatial arrangement and extension of at least one actuator (L₁ to L₄) is stored in form of a bounding box (13, 13.1) framing the actuator or actuators (L₁ to L₄).

9. Building installation with a situation monitor (3) for implementing the process in accordance with any of claims 1 to 8, comprising a sensor (4) scanning the monitored area (6) multidimensionally as well as a control unit (5) for evaluation of the sensor data and with at least one actuator (L₁ to L₄) to be controlled by the control unit (5) of the situation monitor (3), which situation monitor (3) has a programming interface for its parameterization and/or its control, by which programming interface programming markers (8, 12, 16) placed within the monitoring area (6) of the sensor (4) and detected by situation detection can be identified and evaluated with regard to a thus recorded programming code.

10. Building installation in accordance with Claim 9, **caracterized by the fact** that several actuators (L₁ to L₄) can be controlled by the control unit (5) dependent on the situation and independent of one another, and a communication medium, for instance a data bus (2), is provided for communication between the control unit (5) and the actuators (L₁ to L₄).

11. Building installation in accordance with Claim 9 or 10, **caracterized by the fact** that the building installation is connected to an installation bus.

12. Building installation in accordance with any of Claims 9 to 11, **caracterized by the fact** that the sensor (4) is a 3D-sensor and is operated to scan the monitored area (6) in a spatially and depth resolved way.

13. Building installation in accordance with Claim 12, **caracterized by the fact** that the sensor (4) is an optical sensor, notably an infrared sensor, and the distance detection is effected by Time-of-Flight detection.

## Revendications

1. Procédé de réglage des fonctionnalités d'un moniteur de situation (3) qui détecte sa zone de surveillance (6) de manière multidimensionnelle dans le cadre d'une installation de bâtiment commandant au moins un actionneur (L1 à L4), **caractérisé par** les étapes suivantes:
- agencement d'au moins un marqueur de programmation (8, 12, 16) dans la zone de surveillance (6) du moniteur de situation (3) de telle sorte qu'il puisse être détecté par une interface de programmation prévue par le moniteur de situation (3),
- évaluation des données du marqueur de programmation (8, 12, 16) reçues par le moniteur de situation (3) pour identifier un code de programmation contenu sur le marqueur de programmation, le code de programmation représentant une commande, et
- Exécution de la commande transmise par l'au moins un marqueur de programmation (8, 12, 16) au moniteur de situation (3).

2. Procédé selon la revendication 1, **caractérisé en ce que** plusieurs marqueurs de programmation (8, 12, 16) sont disposés à distance les uns des autres dans l'étape d'agencement de l'au moins un marqueur de programmation (8, 12, 16), lesquels marqueurs de programmation (8, 12, 16) sont détectés par le moniteur de situation (3) lors d'une seule détection de situation.

3. Procédé selon la revendication 1 ou 2, **caractérisé en ce que** le code de programmation de l'au moins un marqueur de programmation (8, 12, 16) est évalué par rapport à une information de direction contenue dans celui-ci.

4. Procédé selon la revendication 3, **caractérisé en ce que** l'information de direction est utilisée pour diviser la zone de surveillance (6) du moniteur de situation (3) en au moins deux sous-zones de surveillance (10, 11, 17).

5. Procédé selon la revendication 1 ou 2, **caractérisé en ce que** le code de programmation de l'au moins un marqueur de programmation (12) est évalué par rapport à au moins une information d'actionneur qu'il contient.

6. Procédé selon la revendication 5, **caractérisé en ce que** le code de programmation de l'au moins un marqueur de programmation (12) contient une information sur le type d'actionneur (L1 à L4).

7. Procédé selon la revendication 5 ou 6, **caractérisé en ce que** l'au moins un actionneur (L1 à L4) pouvant être commandé par le moniteur de situation (3) est situé en dehors de la zone de surveillance (6) du moniteur de situation (3) et le code de programmation de l'au moins un marqueur de programmation (12) contient une information sur la disposition spatiale de l'au moins un actionneur (L1 à L4).

8. Procédé selon la revendication 7, **caractérisé en ce que** l'agencement spatial et l'extension d'au moins un actionneur (L1 à L4) est enregistré côté moniteur de situation sous la forme d'un volume englobant (13, 13.1) entourant le ou les actionneurs (L1 à L4).

9. Installation de bâtiment avec un moniteur de situation (3) pour l'application du procédé selon l'une des revendications 1 à 8, comprenant un capteur (4) qui détecte sa région de surveillance (6) de manière multidimensionnelle ainsi qu'une unité de commande (5) qui sert à évaluer les données du capteur et avec au moins un actuateur (L₁ à L₄) à être commandé par l'unité de commande (5) du moniteur de situation (3), lequel moniteur de situation (3) présente une interface de programmation pour son paramétrage et/ou sa commande, au moyen de laquelle des marqueurs de programmation (8, 12, 16) placés dans la zone de surveillance (6) du capteur (4) et détectés par une détection de situation peuvent être identifiés et évalués par rapport à un code de programmation ainsi détecté.

10. Installation de bâtiment selon la revendication 9, **caractérisée en ce que** plusieurs actionneurs (L1 à L4) peuvent être commandés indépendamment les uns des autres par l'unité de commande (5) en fonction de la situation, et un moyen de communication, tel qu'un bus de données (2), est prévu pour communiquer entre l'unité de commande (5) et les actionneurs (L1 à L4).

11. Installation de bâtiment selon la revendication 9 ou 10, **caractérisée en ce que** l'installation de bâtiment est reliée à un bus d'installation.

12. Installation de bâtiment selon l'une des revendications 9 à 11, **caractérisée en ce que** le capteur (4) est un capteur 3D et est utilisé pour détecter la zone de surveillance (6) avec une résolution spatiale et profonde.

13. Installation de bâtiment selon la revendication 12, **caractérisée en ce que** le capteur (4) est un capteur optique, en particulier un capteur infrarouge, et la distance est déterminée par détection du temps de vol.
